# EUROPEAN PATENT SPECIFICATION

(11) **EP 2 458 930 B1**
(45) Date of publication and mention of the grant of the patent: **05.07.2017**
(21) Application number: 10801887.0
(22) Date of filing: 20.05.2010
(51) Int. Cl.: H04W 80/00, H04B 1/7115

(54) **METHOD AND APPARATUS FOR UPDATING PARAMETERS OF UPLINK BASEBAND CHIP ON NODE BASESTATION (NODEB) SIDE IN WIDEBAND CODE DIVISION MULTIPLE ACCESS (WCDMA) SYSTEM**
VERFAHREN UND VORRICHTUNG ZUR AKTUALISIERUNG DER PARAMETER AUF EINEM UPLINK-BASISBAND-CHIP IN EINER KNOTENBASISSTATION (NODE-B) IN EINEM WCDMA-SYSTEM
PROCÉDÉ ET APPAREIL DE MISE À JOUR DE PARAMÈTRES DE PUCE EN BANDE DE BASE DE LIAISON MONTANTE CÔTÉ N UD DE STATION DE BASE (N UD B) DANS UN SYSTÈME D'ACCÈS MULTIPLE PAR RÉPARTITION EN CODE À LARGE BANDE (WCDMA)

(30) Priority: 21.07.2009 CN 200910160091
(43) Date of publication of application: 30.05.2012
(73) Proprietor: ZTE Corporation, Shenzhen, Guangdong 518057 (CN)
(72) Inventor: XU, Hongbo, Guangdong 518057 (CN)
(74) Representative: Studio Torta S.p.A.
(86) International application number: PCT/CN2010/072999
(87) International publication number: WO 2011/009327

(56) References cited:
- EP-A1- 1 962 434
- WO-A1-2008/031761
- CN-A- 1 984 490
- CN-A- 101 048 949
- US-B1- 7 031 373

## Description

### Field of the Invention

The present invention relates to the communication field and, in particular to a method for configuring resources in an uplink baseband chip at NodeB side of a WCDMA system, and especially to a method for parameter update required by the chip-level processing (RAKE demodulation) of the physical layer dedicated channel at the uplink side of the NodeB in the WCDMA system of wireless communication field.

### Background of the Invention

With the emergence and use of 3G technology, the bandwidth and speed of wireless voice communication and data communication have been improved. The present invention relates to the WCDMA technology in 3G field. With the commercialization and further development of the WCDMA system and continuous evolution of protocols, the requirements on the processing delay at NodeB side are stricter. While the development of baseband technology, interference cancellation technology and receiver technology requires higher degree of integrity of the baseband single board and complexity of the implementing algorithm.

In product dedicated channel chip-level processing chip of the last generation, the parameters required by RAKE demodulation are all configured by the embedded software in the chip. New and old parameters use different storage areas to avoid the conflicts between parameter update and parameter use. However, in relevant art the time when the baseband chip uses new parameters is fixed at the frame border or timeslot border (i.e. the beginning or ending of a frame or timeslot). That is to say, the baseband chip carries out switch between new and old parameters to all parameters required in running at the frame border or timeslot border (i.e. switching from using old parameters to using new parameters). As to those channels which have no parameters to be updated, the software also needs to copy old parameters to deliver and store the same into the storage area of new parameters.

US 7 031 373 B1 discloses a method for parameter update in an uplink baseband chip at NodeB side of a WCDMA system.

However, as to the use of multi-path parameters, in some cases the use time of some parameters is not just at the timeslot border but may be advanced or delayed for sometime (maybe in the middle of a frame or timeslot), while the above whole switch mode causes these parameters failing to be switched at the time when switch should be carried out, which brings errors to RAKE demodulation.

### Summary of the Invention

In view of the above defects in the prior art, one of the objects of the present invention is to provide a method and apparatus for flexible parameter configuration and accurate update time in the uplink baseband chip at NodeB side in a WCDMA system.

According to one aspect of the present invention, a method for parameter update in an uplink baseband chip at NodeB side of a WCDMA system is provided. The method comprises the following steps: a software module sending an update parameter required by RAKE demodulation and a corresponding task request thereof to a main control module, with the task request including the effective time of the update parameter; the main control module instructing a task execution module to use the update parameter at the effective time; and the task execution module using the update parameter in real time once receiving the instruction.

According to another aspect of the present invention, an apparatus for parameter update in an uplink baseband chip at NodeB side of a WCDMA system is provided. The apparatus comprises: a software module for sending an update parameter required by RAKE demodulation and a corresponding task request thereof to a main control module, with the task request including the effective time of the update parameter; the main control module for instructing a task execution module to use the update parameter at the effective time; and the task execution module for using the update parameter in real time once receiving the instruction.

The present invention achieves the following technical effects:
a method in which parameter configuration is flexible, update time is accurate, and resource management is flexible; the integration degree is high and the flexibility is good.

Other features and advantages of the present invention will be described in the following description and partly become obvious from the description, or be understood by implementing the present invention. The objects and other advantages of the present invention can be realized and obtained through the structures specially indicated by the description, claims, and drawings.

### Brief Description of the Drawings

The drawings herein are used to provide a further understanding of the present invention and form a part of the description, which are used to explain the present invention together with the embodiments of the present invention without unduly limiting the scope of the present invention. In the drawings:
Fig. 1 is correlation between channel ID and user ID of a multi-path parameter according to an embodiment of the present invention;
Fig. 2 is a structure diagram of a task request list according to an embodiment of the present invention;
Fig. 3 is a structure diagram of a task status list according to an embodiment of the present invention;
Fig. 4 is a flow chart of parameter update in the uplink baseband chip at NodeB side of a WCDMA system according to an embodiment of the present invention;
Fig. 5 is a flow chart of a signal stream of a method for parameter update in the uplink baseband chip at NodeB side of a WCDMA system according to an embodiment of the present invention; and
Fig. 6 is a structural schematic diagram of an apparatus for parameter update in the uplink baseband chip at NodeB side of a WCDMA system according to an embodiment of the present invention.

### Detailed Description of the Embodiments

The particular embodiments of the present invention will now be described in conjunction with the accompanying drawings hereinafter

What is mainly implemented in the present invention is an implementing method for a main control system for managing, configuring and controlling RAKE demodulation and resources thereof in the uplink baseband chip at NodeB side in a WCDMA system, and in particular relates to a method and apparatus for parameter update in the uplink baseband chip at NodeB side in the WCDMA system.

Several concepts here will first be described, in which a UE user refers to a mobile terminal; and a channel refers to a data channel of transmitted information sent to NodeB by a UE. The baseband chip includes a software (referred to as software module) embedded in the baseband chip, a main control system (referred to as main control module), and a task execution system (referred to as task execution module). In this case, the main control system refers to a control system which controls the running of chip hardware and mainly carries out functions such as channel new establishment, running, parameter update, channel deletion, etc. IP is the abbreviation of Iteration Period. One IP refers to that the cycle processing period of the main control system is 64-chip and one chip is approximately equal to 0.0000002605s. From the view of work division of software and hardware, hardware provides physical resources of RAKE demodulation of various dedicated channels for the UE, software portion (i.e. software module) refers to CPU such as ARM core and MIPS core, and the software here refers to software running in the CPU.

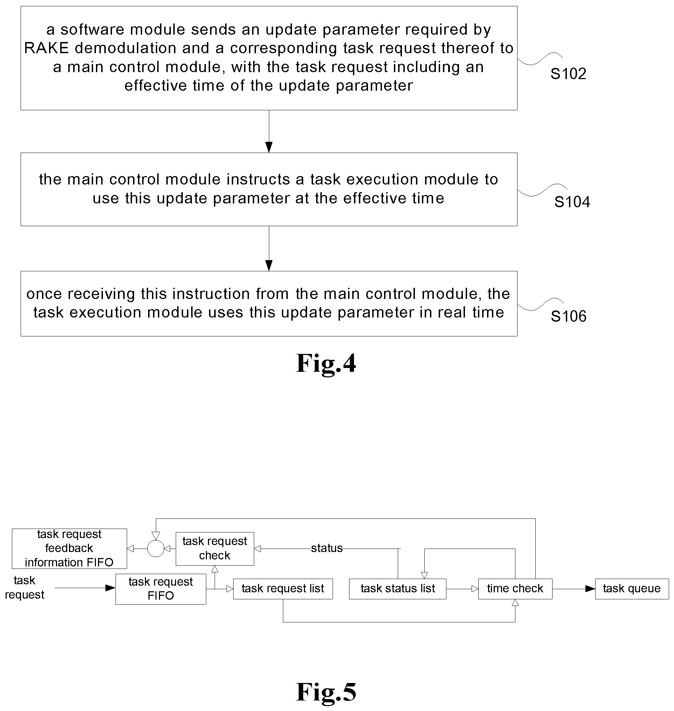

Fig. 4 is a flow chart of a method for parameter update in the uplink baseband chip at NodeB side of a WCDMA system according to an embodiment of the present invention. The method comprises the following steps.
Step S102: a software module sends an update parameter (i.e. new parameter) required by RAKE demodulation and a corresponding task request thereof to a main control module, with the task request including an effective time of the update parameter.
Step S104: the main control module instructs a task execution module to use this update parameter at the effective time.
Step S106: once receiving this instruction from the main control module, the task execution module uses this update parameter in real time.

In this embodiment, since corresponding task requests are sent for different new parameters, the main control module uses a new parameter at the parameter effective time instructed by the task request in the situation that the channel corresponding to this parameter is in running status and the task request is effective. Thus the new parameter can be used according to the effective time of different parameters, which solves the problem in relevant art that all new parameters are used at the same time and errors occur.

Preferably, all parameters required by RAKE demodulation in the baseband chip can be classified into various classes; and step S102 comprises: the software module sending an update parameter to the main control module; and the software module sending a task request corresponding to the type of the update parameter to the main control module, with the task request including the effective time of the update parameter.

Each parameter is updated independently according to its own time point. However, there are hundreds of parameters in the present system, and their update periods and update time are different from each other. This embodiment provides a processing mechanism to process the update of these parameters uniformly. First of all, these hundreds of parameters are classified according to different update periods and different types, so that several major types of parameter update task requests are refined. Then, a task configuration controller is used to achieve the comparison of effective time points and the sending of task instructions. At the same time, compared to the products of previous version, the number of users accommodated by the chip is increased, the effective processing time is shortened, and a task queue mode is used to filter effective task instructions to improve the running efficiency of the task execution system.

Here, the capacity of the present system is preset, and in order to be able to accommodate N (N is a positive integral number) UE users, possible channel types of each UE user are DPCCH, HS-DPCCH, E-DPCCH, DPDCH, and E-DPDCH. Since the sum of the number of DPDCH and E-DPDCH channels will not exceed N, the number of channels which can be accommodated by the present system is 4N. The classification of parameters (i.e. parameters required by RAKE demodulation) required by running the system is as follows (each classification includes several different parameters): class A is chip-level parameter and each channel has a group and there are 4N groups of parameters in total; class B is multi-path parameter and each UE user has a group and there are N groups of parameters in total (several channels which belong to the same UE user have a group of parameters in total); class C is frequency deviation parameter and each UE user has a group and there are N groups of parameters in total (several channels which belong to the same UE user have a group of parameters in total), and class D is spread factor parameter and each channel has a group and there are 4N groups of parameters in total. The update periods and effective time points of the above four classes of parameters are different from each other, therefore task requests of four types of parameter update are defined, and task requests of channel new establishment and channel deletion added therewith all use uniform data structure of task request, and particular format of which can refer to Table 1.

**Table 1 data structure of task request**

| width (bit) | 4 bits | 11 bits | 3 bits | 3 bits | 12 bits |
|---|---|---|---|---|---|
| name | Sequence number | Channel ID | Parameter storage area | Type of task request | Effective time point |
| value | serial number for indicating the same type of task request of the same channel | 0∼(4N-1) | 0∼7 | 0: channel new establishment | Effective time point refers to the time point of the parameter which uses new storage area |
| | | | | 1: channel deletion | |
| | | | | 2: class A update (chip-level parameter) | |
| | | | | 3: class B update (multi-path parameter) | |
| | | | | 4: class C update (frequency deviation parameter) | |
| | | | | 5: class D update (spreading factor parameter) | |

Each type of task request is sent independently by the software module, and the time sequence of different task requests is determined by the software module and controlled by the effective time point in the task request.

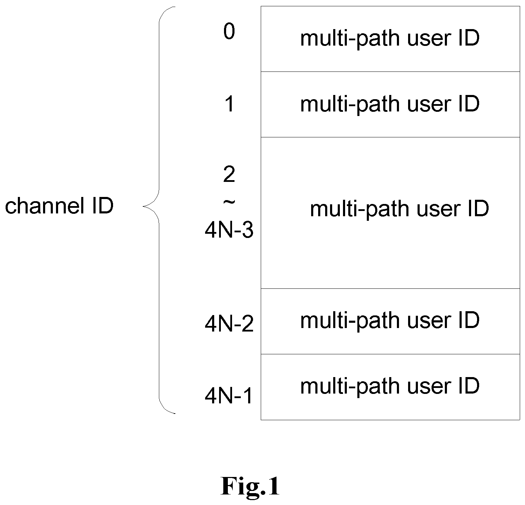

The above four parameter type groupings cannot completely cover all the parameters required by the system. However the remaining other parameters have their own features, i.e. they have the same update period and update effective time point as one certain parameter class of the above four parameter classes, and they can switch to a new parameter storage area simultaneously. Therefore, the same task request can be used. For example, control channel symbol-level parameter is that each channel has a group and there are 4N groups of parameters in total, and they are the same as the above class A update (chip-level parameter). Therefore, as to one certain channel, the chip-embedded software first sends the chip-level parameter and control channel symbol-level parameter to the main control system respectively, and then sends a class A task request of this channel. Then the main control system learns that this task request updates the chip-level parameter and control channel symbol-level parameter simultaneously at the designated effective time point In addition, there are 4N channel IDs in the data structure of the task request, while class B and class C each corresponds to N users. Therefore the correlation between channel ID and user ID of multi-path parameter needs to be set, see Fig. 1. Channel ID and user ID of frequency deviation parameter also have similar correlation.

In this preferred embodiment, there are a large amount of parameters required by RAKE demodulation in the baseband chip (up to several hundreds) and the update periods and update time of various parameters are different. Thus, the efficiency of parameter sending and task instruction sending is higher by classifying the parameters and defining task requests corresponding to parameter classes. The resources of the baseband chip are also saved, the number of users accommodated by the chip is increased and the effective processing time is shortened.

Preferably, after the software module sends the update parameter required by RAKE demodulation, it further comprises the following steps: the main control module storing this update parameter into a corresponding new parameter storage; and the task request sent by the software module in step S102 further includes the serial number of this new parameter storage. In this way, new parameter and old parameter are stored into different storages, which avoid conflicts between parameter update and parameter use. In addition, the software module sends the serial number of the new parameter storage where the new parameter is stored to the main control module, and the main control module can send this serial number to the task execution module at the effective time of the new parameter to achieve the use of new parameter.

Preferably, step S104 comprises: the main control module periodically checking the effectiveness of the task request and the status of the channel corresponding to the update parameter; the main control module comparing the effective time of this task request with the system time in the situation that this task request is effective and the status of this channel is running; and if the effective time is equal to the system time, then the main control module sending an instruction to the task execution module, with this instruction including the serial number of the new parameter storage.

Then, step S106 comprises: once receiving the above instruction from the main control module, the task execution module using the update parameter in the new parameter storage corresponding to the serial number included in this instruction. Thus, finally the update and use of new parameters are achieved.

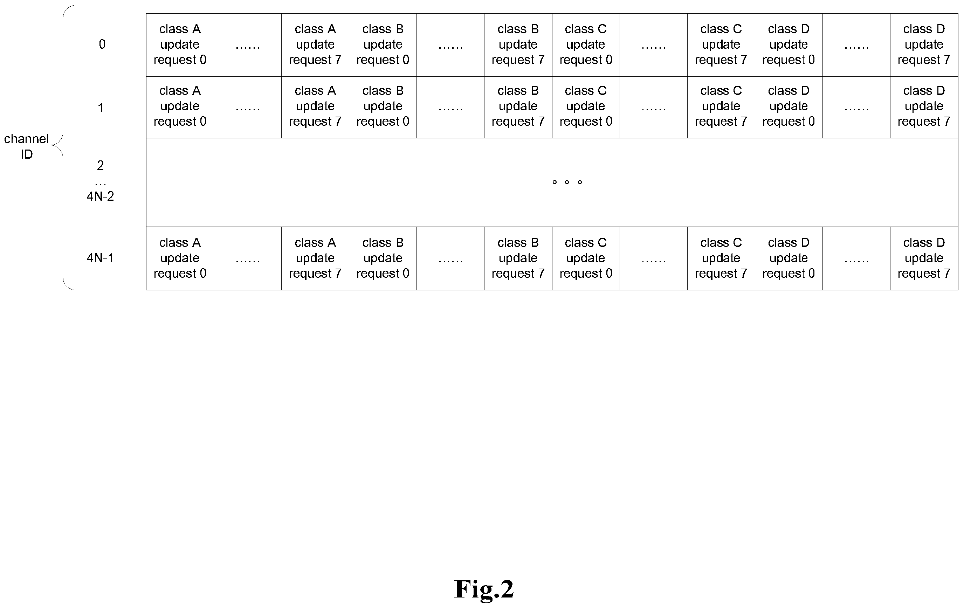

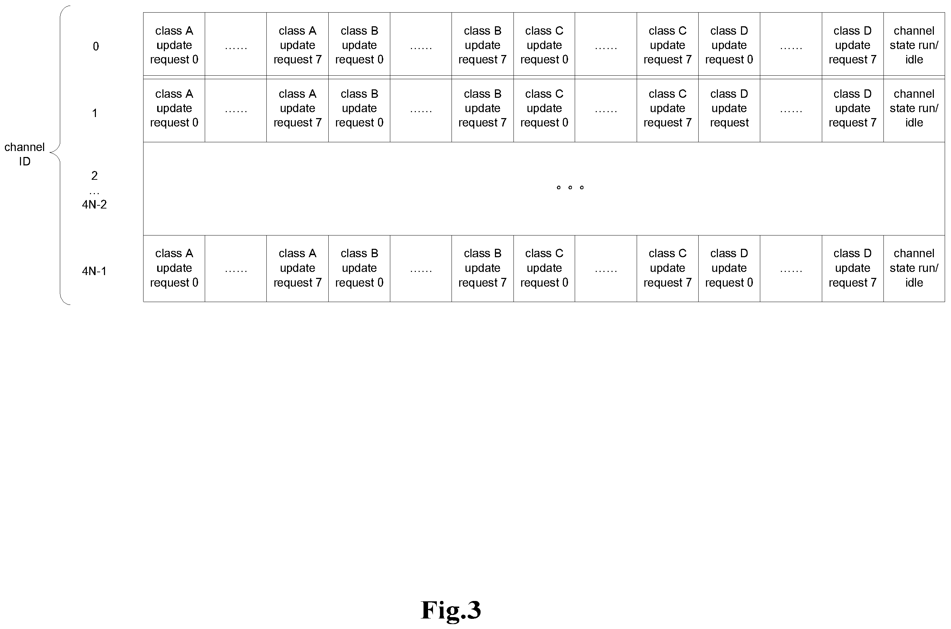

In this case, the main control module periodically checking the effectiveness of the task request and the status of the channel corresponding to the update parameter comprises: the main control module storing the task request into a first in first out (FIFO) RAM; reading the task request from the FIFO RAM, checking the effectiveness of the task request which is read out, and writing the effective task request into a task request list (as shown in Fig. 2); setting the effectiveness flag of the task request at a corresponding position in a task status list (as shown in Fig. 3) to be effective, wherein the task status list stores the effectiveness flag of the task request and the running status of the corresponding channel; and polling the task request list and task status list in an order from small to big channel ID, and as to each channel, first checking the channel running status in the task status list, if the channel running status is run, then further checking whether the effectiveness flag of the task request in the task status list is effective.

During its implementation, the processing of the task request can be achieved by the task configuration controller in the main control module. The software module first sends one certain class of parameters to be updated and then sends a corresponding task request; the task configuration controller first stores the task request into the FIFO (first in first out RAM), and the task configuration controller divides each processing period into two portions of task request check stage (or period) and time check stage (or period), in which the task request check stage refers to reading the task request from the task request FIFO, checking the effectiveness of the task request, writing the effective task request into the task request list, and setting the status of the task at a corresponding position in the task status list to be effective. The structure of the task request list is as shown in Fig. 2, and the structure of the task status list is as shown in Fig. 3. What are stored in the task request list are mainly the effective time points of various task requests, and what are stored in the task status list are mainly the effectiveness flags of corresponding task requests and the running status of corresponding channels. At the task request check stage, if it is found that the task request is ineffective, then it has to feed back error information to the software. At the time check stage what needs to do is polling the task request list and the task status list in an order from small to big channel ID, and as to each channel, first check the channel running status in the task status list, if it is run, then it indicates that the current channel is running, then further check the effectiveness flags of all the task requests in the task status list, if effective, then further check the effective time points of the task requests in the corresponding task request list. Then, compare the effective time points of the task requests with the system time, if they are equal to each other, then it indicates that these task requests should be effective and the new parameter storage should be used. Then an update instruction is delivered to the subsequent task execution system, and this task execution system can use the new parameters in the new parameter storage carried in the update instruction. At the time check stage, after the task requests of each channel are effective, information that the task requests are finished correctly should be fed back to the software.

At the time check stage of the above task configuration controller, the channel running status of some channels in the task status list are idle, then it indicates that these channels are not running. Thus the subsequent task execution system does not need to process these channels. Therefore, the main control system filters those channels which are in the idle status by way of a task queue and only stores the channel ID of the channels which are in the running status and the serial number information of the new parameter storage into the task queue. The subsequent task execution system reads the task queue and carries out processing. Since what are in the task queue are effective channels which are running, limited time resources of hardware can be made the best use and the processing efficiency can be improved.

Preferably, before step S102, it also comprises the following steps: when it needs to newly establish a channel and the channel begins to run, the software module sends a channel establishment task request; then in step S104, after the main control module periodically checks the effectiveness of the task request and the status of the channel corresponding to the update parameter, it further comprises the following steps: the main control module setting the channel status corresponding to the channel in the task status list to run; and writing the channel ID of the channel and the serial number of the new parameter storage into the task queue and at the same time setting the effectiveness flag of the corresponding task request in the task status list to be ineffective. In this way, channel new establishment can be achieved and the new parameter storage can be informed.

Preferably, the main control module periodically checking the effectiveness of the task request and the status of the channel corresponding to the update parameter further comprises: when checking the task request in the task status list, if the channel status is run, then the main control module also writes the channel ID of this channel into the task queue in the situation that the task request corresponding to the channel is ineffective. The running efficiency of the task execution system is improved by filtering effective task instructions by way of a task queue.

Preferably, the task request further includes task request name, serial number, channel ID, parameter storage area, and task request type.

Preferably, the parameters are classified according to the update periods and types of the parameters required by RAKE demodulation, wherein the classified parameters comprise: chip-level parameter, multi-path parameter, frequency deviation parameter, spreading factor parameter and parameters which have the same update period and type as those of the above four classes of parameters.

In this preferred embodiment, all the parameters required by RAKE demodulation are classified into various classes according to the characteristics of the parameters, thus it does not need to define one type of task request for each kind of parameters, saving the resources of the baseband chip.

Fig. 5 is a flow chart of a signal stream of a method for parameter update in the uplink baseband chip at NodeB side of a WCDMA system according to an embodiment of the present invention, in which the processing procedure of the task request is shown.

The following example shows the flow of a method for parameter update in the uplink baseband chip at NodeB side of a WCDMA system according to an embodiment of the present invention.

This method comprises the following implementing steps.
Step 1: when one channel is newly established and begins to run, the software will first send a channel establishment task request; then the software will send a chip-level parameter, a symbol level parameter, a multi-path parameter, a frequency deviation parameter, a spreading factor parameter and so on of the channel to a main control system before the effective time of these parameters, and the main control system forwards these parameters to a task execution system and stores the same into a corresponding parameter RAM.
Step 2: then the software will sends information such as the effective time of the parameters sent in step 1 and the serial number of the new parameter storage area and so on to the main control system by way of task request, which includes four types of task requests. The main control system stores the task request in an FIFO.
Step 3: the main control system carries out processing by a period of IP, and divides the time of each IP into two portions, in which the first stage is to read a task request from the FIFO, and analyze the effectiveness of the request, if the request is effective, then the task request is stored into a task request list and the effectiveness flag of the task request at a corresponding position in a task status list is set to be effective.
Step 4: at the second stage of each IP, the main control system will poll the task status list, if the channel status in the entry of one certain channel is run, then it further checks whether each task request is effective; if the task request of one certain entry is effective, then the effective time point of the task request is compared with the system time; if the time is reached, then this request has to be processed, and if it is not the time, then no processing will be performed and the poll continues.
Step 5: as to an effective request that the effective time of which is reached, assuming that the channel ID is n, if the request is to newly establish a channel, then the position of the corresponding channel status of n in the entry of the task status list is set to run; then the value n of the channel ID and the serial number of the new parameter storage area are written into a task queue, and at the same time the effectiveness flag of the task request of n in the task status list is set to be ineffective.
Step 6: when checking a task request in the task status list, if the channel status is run, then even if no task request is effective, it still needs to write this channel ID into the task queue to inform a task execution subsystem to process the same.

Apparently, the above steps are only illustrative and are used for describing the principles of the present invention and not for limiting the present invention. And according to the needs, the method of the present invention may not include one or more of the above steps.

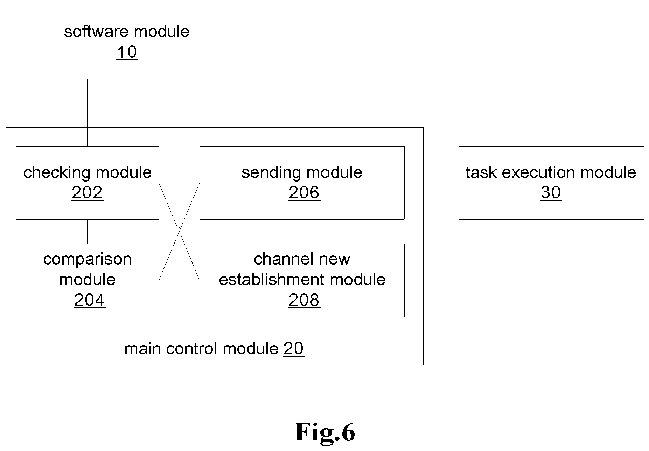

Fig. 6 is a structural schematic diagram of an apparatus for parameter update in the uplink baseband chip at NodeB side of a WCDMA system according to an embodiment of the present invention.

As shown in Fig. 6, an apparatus for parameter update in an uplink baseband chip at NodeB side of a WCDMA system comprises: a software module **10** adapted to send an update parameter required by RAKE demodulation and a corresponding task request thereof to a main control module **20,** with the task request including the effective time of the update parameter; the main control module **20** adapted to instruct a task execution module **30** to use the update parameter at the effective time; and the task execution module **30** adapted to use the update parameter in real time once receiving the instruction.

In this case, the parameters required by RAKE demodulation are classified into various classes; and the software module **10** comprises: a first sending module adapted to send an update parameter to the main control module **20;** and a second sending module adapted to send a task request corresponding to this update parameter to the main control module **20,** with this task request including the effective time of the update parameter

The above update apparatus further comprises: a new parameter storage for storing the update parameter required by RAKE demodulation sent by the software module **10;** and the above task request further includes the serial number of the new parameter storage which is used for storing the update parameter.

Preferably, the main control module **20** comprises: a checking module **202** adapted to periodically check the effectiveness of the task request and the status of the channel corresponding to the update parameter; a comparison module **204** adapted to compare the effective time of this task request with the system time in the situation that this task request is effective and the status of this channel is run; and a sending module **206** adapted to send an instruction to the task execution module **30** in the situation that the comparison result of the comparison module **204** is that the effective time is equal to the system time, with this instruction including the serial number of the new parameter storage.

Preferably, the task execution module **30** comprises: a receiving module adapted to receive the instruction from the main control module; and a use module adapted to use the update parameter in the new parameter storage corresponding to the serial number in real time once receiving the instruction.

Preferably, the checking module **202** comprises: a first in first out random access memory adapted to store the task request; a first detection module adapted to read the task request from the first in first out random access memory, check the effectiveness of the task request which is read out, and write the effective task request into a task request list; further adapted to set the effectiveness flag of the task request at a corresponding position in a task status list to be effective, wherein the task status list stores the effectiveness flag of the task request and the running status of a corresponding channel; a second detection module adapted to poll the task request list and the task status list in an order from small to big channel ID, and as to each channel, first check the channel running status in the task status list, if the channel running status is run, then further check whether the effectiveness flag of the task request in the task status list indicates to be effective.

Preferably, the software module **10** is also adapted to send a channel establishment task request when it needs to newly establish a channel and the channel begins to run before sending an update parameter required by RAKE demodulation and a task request corresponding thereto to the main control module; and the main control module **20** also comprises: a channel new establishment module **208** adapted to, after the checking module **202** periodically checks the effectiveness of the task request and the status of a channel corresponding to the update parameter, set the channel status corresponding to the channel in the task status list to be run; and further adapted to write the channel ID of the channel and the serial number of a new parameter storage into a task queue and at the same time set the effectiveness flag of the corresponding task request in the task status list to be ineffective.

The present invention achieves the following technical effects:
a highly integrated and flexible method and system, in which parameter configuration is flexible, update time is accurate, and resource management is flexible.

Above description is only to illustrate the preferred embodiments but not to limit the present invention. Various alterations and changes to the present invention, falling within the scope of the claims, are apparent to those skilled in the art.

## Claims

1. A method for parameter update in an uplink baseband chip at NodeB side of a WCDMA system, **characterized by** comprising the steps of:
a software module sending an update parameter required by RAKE demodulation and a corresponding task request thereof to a main control module, with the task request including effective time of the update parameter;
the main control module instructing a task execution module at the effective time to use the update parameter; and
the task execution module using the update parameter in real time once receiving the instruction.

2. The method according to Claim 1, **characterized in that** the parameter required by RAKE demodulation is classified into several classes; and a software module sending an update parameter required by RAKE demodulation and a corresponding task request thereof to the main control module comprises:
the software module sending the update parameter to the main control module; and
the software module sending a task request corresponding to the class of the update parameter to the main control module, with the task request including the effective time of the update parameter.

3. The method according to Claim 1, **characterized in that** after a software module sending an update parameter required by RAKE demodulation, it further comprises the step of: the main control module storing the update parameter into a corresponding new parameter storage; and the task request further includes the serial number of the new parameter storage.

4. The method according to Claim 3, **characterized in that** the main control module instructing a task execution module at the effective time to use the update parameter comprises:
the main control module periodically checking the effectiveness of the task request and the status of a channel corresponding to the update parameter;
the main control module comparing the effective time of the task request with the system time in the situation that the task request is effective and the status of the channel is run; and
if the effective time is equal to the system time, then the main control module sending the instruction to the task execution module, with the instruction including the serial number of the new parameter storage.

5. The method according to Claim 4, **characterized in that** once receiving the instruction, the task execution module using the update parameter in real time comprises:
once receiving the instruction, the task execution module using the update parameter in the new parameter storage corresponding to the serial number in real time.

6. The method according to Claim 4, **characterized in that** the main control module periodically checking the effectiveness of the task request and the status of a channel corresponding to the update parameter comprises:
the main control module storing the task request into a first in first out random access memory;
reading the task request from the first in first out random access memory, checking the effectiveness of the task request which is read out, and writing the effective task request into a task request list;
setting the effectiveness flag of the task request at a corresponding position in a task status list to be effective, wherein the task status list stores the effectiveness flag of the task request and the running status of a corresponding channel; and
polling the task request list and the task status list in an order from small to big channel ID, and as to each channel, first checking the channel running status in the task status list, if the channel running status is run, then further checking whether the effectiveness flag of the task request in the task status list indicates to be effective.

7. The method according to Claim 4, **characterized in that**
before a software module sending an update parameter required by RAKE demodulation and a task request corresponding thereto to the main control module, it further comprises the step of: when it needs to newly establish a channel and the channel begins to run, the software module sending a channel establishment task request; and
after the main control module periodically checks the effectiveness of the task request and the status of a channel corresponding to the update parameter, it further comprises the step of: the main control module setting the channel status corresponding to the channel in the task status list to be run; and writing the channel ID of the channel and the serial number of a new parameter storage into a task queue and at the same time setting the effectiveness flag of the corresponding task request in the task status list to be ineffective.

8. The method according to Claim 4, **characterized in that** the main control module periodically checking the effectiveness of the task request and the status of a channel corresponding to the update parameter further comprises:
when checking the task request in the task status list, if the channel status is run, then the main control module also writing the channel ID of the channel into the task queue in the situation that the task request corresponding to the channel is ineffective.

9. The method according to Claim 1, **characterized in that** the task request further comprises task request name, serial number, channel ID, parameter storage area, and task request type.

10. The method according to any one of Claims 1-8, **characterized in that** the parameter is classified according to the update period and type of the parameter required by RAKE demodulation, and the classified parameter comprises: chip-level parameter, multi-path parameter, frequency deviation parameter, spreading factor parameter and parameters which have the same update period and type as those of the above four classes of parameters.

11. An apparatus for parameter update in an uplink baseband chip at NodeB side of a WCDMA system, **characterized by** comprising:
a software module, adapted to send an update parameter required by RAKE demodulation and a corresponding task request thereof to a main control module, with the task request including the effective time of the update parameter;
the main control module, adapted to instruct a task execution module at the effective time to use the update parameter; and
the task execution module, adapted to use the update parameter in real time once receiving the instruction.

12. The apparatus according to Claim 11, **characterized in that** the main control module comprises:
a checking module, adapted to periodically check the effectiveness of the task request and the status of a channel corresponding to the update parameter;
a comparison module, adapted to compare the effective time of the task request with the system time in the situation that the task request is effective and the status of the channel is run; and
a sending module, adapted to send the instruction to the task execution module in the situation that the comparison result of the comparison module is that the effective time is equal to the system time, with the instruction including the serial number of the new parameter storage.

13. The apparatus according to Claim 12, **characterized in that** the task execution module comprises:
a receiving module, adapted to receive the instruction from the main control module; and
a use module, adapted to use the update parameter in the new parameter storage corresponding to the serial number in real time once receiving the instruction.

14. The apparatus according to Claim 12, **characterized in that** the checking module comprises:
a first in first out random access memory, adapted to store the task request;
a first detection module, adapted to read the task request from the first in first out random access memory, check the effectiveness of the task request which is read out, and write the effective task request into a task request list; further adapted to set the effectiveness flag of the task request at a corresponding position in a task status list to be effective, wherein the task status list stores the effectiveness flag of the task request and the running status of a corresponding channel; and
a second detection module, adapted to poll the task request list and the task status list in an order from small to big channel ID, and as to each channel, first check the channel running status in the task status list, if the channel running status is run, then further checking whether the effectiveness flag of the task request in the task status list indicates to be effective.

15. The apparatus according to Claim 12, **characterized in that**
the software module is further adapted to send a channel establishment task request, when it needs to newly establish a channel and the channel begins to run, and before sending an update parameter required by RAKE demodulation and a task request corresponding thereto to the main control module; and
the main control module further comprises: a channel new establishment module adapted to, after the checking module periodically checks the effectiveness of the task request and the status of a channel corresponding to the update parameter, set the channel status corresponding to the channel in the task status list to be run; and further adapted to write the channel ID of the channel and the serial number of a new parameter storage into a task queue and at the same time set the effectiveness flag of the corresponding task request in the task status list to be ineffective.

## Patentansprüche

1. Verfahren zur Parameteraktualisierung auf einem Uplink-Basisband-Chip auf der Seite des Node-B in einem WCDMA-System, **dadurch gekennzeichnet, dass** es die folgenden Schritte umfasst:
Senden eines Aktualisierungsparameters, der von der RAKE-Demodulation benötigt wird, und einer dementsprechenden Aufgabenanforderung an ein Hauptsteuermodul durch ein Softwaremodul, wobei die Aufgabenanforderung die effektive Zeit des Aktualisierungsparameters umfasst;
Anweisen eines Aufgabenausführungsmoduls zu der effektiven Zeit, den Aktualisierungsparameter zu verwenden, durch das Hauptsteuermodul; und
Verwenden des Aktualisierungsparameters in Echtzeit durch das Aufgabenausführungsmodul, wenn es einmal die Anweisung empfängt.

2. Verfahren nach Anspruch 1, **dadurch gekennzeichnet, dass** der von der RAKE-Demodulation benötigte Parameter in mehrere Klassen klassifiziert wird; und dass das Senden eines Aktualisierungsparameters, der von der RAKE-Demodulation benötigt wird, und einer dementsprechenden Aufgabenanforderung an das Hauptsteuermodul durch ein Softwaremodul umfasst:
Senden des Aktualisierungsparameters an das Hauptsteuermodul durch das Softwaremodul; und
Senden einer Aufgabenanforderung, die der Klasse des Aktualisierungsparameters entspricht, durch das Softwaremodul an das Hauptsteuermodul, wobei die Aufgabenanforderung die effektive Zeit des Aktualisierungsparameters umfasst.

3. Verfahren nach Anspruch 1, **dadurch gekennzeichnet, dass** es nach dem Senden eines Aktualisierungsparameters, der von der RAKE-Demodulation benötigt wird, ferner den folgenden Schritt umfasst; Speichern des Aktualisierungsparameters in einen entsprechenden Speicher für neue Parameter durch das Hauptsteuermodul; und die Aufgabenanforderung ferner die Seriennummer des Speichers für neue Parameter umfasst.

4. Verfahren nach Anspruch 3, **dadurch gekennzeichnet, dass** das Anweisen eines Aufgabenausführungsmoduls, zu der effektiven Zeit den Aktualisierungsparameter zu verwenden, durch das Hauptsteuermodul umfasst:
regelmäßiges Prüfen der Effektivität der Aufgabenanforderung und des Status eines Kanals, der dem Aktualisierungsparameter entspricht, durch die Hauptsteuereinheit;
Vergleichen der effektiven Zeit der Aufgabenanforderung mit der Systemzeit durch das Hauptsteuermodul in der Situation, in der die Aufgabeanforderung effektiv ist und der Status des Kanals laufend ist; und
wenn die effektive Zeit gleich der Systemzeit ist, dann Senden der Anweisung an das Aufgabenausführungsmodul durch das Hauptsteuermodul, wobei die Anweisung die Seriennummer des Speichers für neue Parameter umfasst.

5. Verfahren nach Anspruch 4, **dadurch gekennzeichnet, dass** das Verwenden des Aktualisierungsparameters in Echtzeit durch das Aufgabenausführungsmodul, wenn es die Anweisung einmal empfängt, umfasst:
Verwenden des Aktualisierungsparameters in dem Speicher für neue Parameter, der der Seriennummer entspricht, in Echtzeit durch das Aufgabenausführungsmodul, wenn es die Anweisung einmal empfängt.

6. Verfahren nach Anspruch 4, **dadurch gekennzeichnet, dass** das regelmäßige Prüfen der Effektivität der Aufgabenanforderung und des Status eines Kanals, der dem Aktualisierungsparameter entspricht, durch das Hauptsteuermodul umfasst:
Speichern der Ausgabenanforderung in einen FIFO-Direktzugriffsspeicher;
Lesen der Aufgabenanforderung aus dem FIFO-Direktzugriffsspeicher; Prüfen der Effektivität der Aufgabenanforderung, die ausgelesen wird, und Schreiben der effektiven Aufgabenanforderung in eine Aufgabenanforderungsliste;
Festlegen des Effektivitätsmarkers der Aufgabenanforderung an einer entsprechenden Position in einer Aufgabenstatusliste als effektiv, wobei die Aufgabenstatusliste den Effektivitätsmarker der Aufgabenanforderung und den Betriebsstatus eines entsprechenden Kanals speichert; und
Abfragen der Aufgabenanforderungsliste und der Aufgabenstatusliste in einer Reihenfolge von kleiner zu großer Kanal-ID und zuerst Prüfen bezüglich jedes Kanals des Kanalbetriebsstatus in der Aufgabenstatusliste, wenn der Kanalbetriebsstatus laufend ist, dann ferner Prüfen, ob der Effektivitätsmarker der Aufgabenanforderung in der Aufgabenstatusliste als effektiv angezeigt wird.

7. Verfahren nach Anspruch 4, **dadurch gekennzeichnet, dass**
es, bevor ein Softwaremodul einen Aktualisierungsparameter, der von der RAKE-Demodulation benötigt wird, und eine dementsprechende Aufgabenanforderung an das Hauptsteuermodul sendet, ferner den folgenden Schritt umfasst: wenn es einen Kanal neu einrichten muss und der Kanal zu laufen beginnt, Senden einer Kanaleinrichtungsaufgabenanforderung durch das Softwaremodul; und
es, nachdem das Hauptsteuermodul die Effektivität der Aufgabeanforderung und den Status eines Kanals, der dem Aktualisierungsparameter entspricht, regelmäßig prüft, ferner den folgenden Schritt umfasst: Festlegen des Kanalstatus, der dem Kanal entspricht, in der Hauptstatusliste, als laufend durch das Hauptsteuermodul; und Schreiben der Kanal-ID des Kanals und der Seriennummer eines Speichers für neue Parameter in eine Aufgabenwarteschlange und gleichzeitig Festlegen des Effektivitätsmarkers der entsprechenden Aufgabenanforderung in der Aufgabenstatusliste als ineffektiv.

8. Verfahren nach Anspruch 4, **dadurch gekennzeichnet, dass** das regelmäßige Prüfen der Effektivität der Aufgabenanforderung und des Status eines Kanals, der dem Aktualisierungsparameter entspricht, durch das Hauptsteuermodul ferner umfasst:
wenn die Aufgabenanforderung in der Aufgabenstatusliste geprüft wird, wenn der Kanalstatus laufend ist, dann auch Schreiben der Kanal-ID des Kanals in die Aufgabenwarteschlange durch das Hauptsteuermodul in der Situation, in der die Aufgabenanforderung, die dem Kanal entspricht, ineffektiv ist.

9. Verfahren nach Anspruch 1, **dadurch gekennzeichnet, dass** die Aufgabenanforderung ferner den Aufgabenanforderungsnamen, die Seriennummer, die Kanal-ID, den Parameterspeicherbereich und den Aufgabenanforderungstyp umfasst.

10. Verfahren nach einem der Ansprüche 1 - 8, **dadurch gekennzeichnet, dass** der Parameter gemäß der Aktualisierungsperiode und dem Typ des Parameters, der von der RAKE-Demodulation benötigt wird, klassifiziert wird und der klassifizierte Parameter umfasst: Parameter auf Chip-Ebene, Mehrwegeparameter, Frequenzabweichungsparameter; Spreizfaktorparameter und Parameter, die die gleiche Aktualisierungsperiode und den gleichen Typ wie die der vorstehenden vier Parameterklassen haben.

11. Vorrichtung zur Parameteraktualisierung auf einem Uplink-Basisband-Chip auf der Seite des Node-B in einem WCDMA-System, **dadurch gekennzeichnet, dass** es umfasst:
ein Softwaremodul, das geeignet ist, einen Aktualisierungsparameter, der von der RAKE-Demodulation benötigt wird, und eine dementsprechende Aufgabenanforderung an ein Hauptsteuermodul zu senden, wobei die Aufgabenanforderung die effektive Zeit des Aktualisierungsparameters umfasst;
das Hauptsteuermodul, das geeignet ist, ein Aufgabenausführungsmodul zu der effektiven Zeit anzuweisen, den Aktualisierungsparameter zu verwenden; und
ein Aufgabenausführungsmodul, das geeignet ist, den Aktualisierungsparameter in Echtzeit zu verwenden, wenn es einmal die Anweisung empfängt.

12. Vorrichtung nach Anspruch 11, **dadurch gekennzeichnet, dass** das Hauptsteuermodul ferner umfasst:
ein Prüfmodul, das geeignet ist, die Effektivität der Aufgabenanforderung und den Status eines Kanals, der dem Aktualisierungsparameter entspricht, regelmäßig zu prüfen;
ein Vergleichsmodul, das geeignet ist, die effektive Zeit der Aufgabenanforderung mit der Systemzeit in der Situation, in der die Aufgabeanforderung effektiv ist und der Status des Kanals laufend ist, zu vergleichen; und
ein Sendemodul, das geeignet ist, in der Situation, in der das Vergleichsergebnis des Vergleichsmoduls ist, dass die effektive Zeit gleich der Systemzeit ist, die Anweisung an das Aufgabenausführungsmodul zu senden, wobei die Anweisung die Seriennummer des Speichers für neue Parameter umfasst.

13. Vorrichtung nach Anspruch 12, **dadurch gekennzeichnet, dass** das Aufgabenausführungsmodul umfasst:
ein Empfangsmodul, das geeignet ist, die Anweisung von dem Hauptsteuermodul zu empfangen; und
ein Verwendungsmodul, das geeignet ist, den Aktualisierungsparameter in dem Speicher für neue Parameter, der der Seriennummer entspricht, in Echtzeit zu verwenden, wenn es die Anweisung einmal empfängt.

14. Vorrichtung nach Anspruch 12, **dadurch gekennzeichnet, dass** das Prüfmodul umfasst:
einen ersten Direktzugriffsspeicher, der geeignet ist, die Aufgabenanforderung zu speichern;
ein erstes Erfassungsmodul, das geeignet ist, die Aufgabenanforderung aus dem ersten Direktzugriffsspeicher zu lesen, die Effektivität der Aufgabenanforderung, die ausgelesen wird, zu prüfen und die effektive Aufgabenanforderung in eine Aufgabenanforderungsliste zu schreiben; das ferner geeignet ist, den Effektivitätsmarker der Aufgabenanforderung an einer entsprechenden Position in einer Aufgabenstatusliste als effektiv festzulegen, wobei die Aufgabenstatusliste den Effektivitätsmarker der Aufgabenanforderung und den Betriebsstatus eines entsprechenden Kanals speichert; und
ein zweites Erfassungsmodul, das geeignet ist, die Aufgabenanforderungsliste und die Aufgabenstatusliste in einer Reihenfolge von kleiner zu großer Kanal-ID abzufragen und zuerst bezüglich jedes Kanals den Kanalbetriebsstatus in der Aufgabenstatusliste, wenn der Kanalbetriebsstatus laufend ist, zu prüfen, dann ferner zu prüfen, ob der Effektivitätsmarker der Aufgabenanforderung in der Aufgabenstatusliste als effektiv angezeigt wird.

15. Vorrichtung nach Anspruch 12, **dadurch gekennzeichnet, dass**
das Softwaremodul ferner geeignet ist, bevor es einen Aktualisierungsparameter, der von der RAKE-Demodulation benötigt wird, und eine dementsprechende Aufgabenanforderung an das Hauptsteuermodul sendet, eine Kanaleinrichtungsaufgabenanforderung zu senden, wenn es einen neuen Kanal einrichten muss, und der Kanal zu laufen beginnt, und
das Hauptsteuermodul ferner umfasst: ein Einrichtungsmodul für neue Kanäle, das geeignet ist, nachdem das Prüfmodul die Effektivität der Aufgabeanforderung und den Status eines Kanals, der dem Aktualisierungsparameter entspricht, regelmäßig prüft, den Kanalstatus, der dem Kanal entspricht, in der Hauptstatusliste, als laufend festlegt; und ferner geeignet ist, die Kanal-ID des Kanals und die Seriennummer eines Speichers für neue Parameter in eine Aufgabenwarteschlange zu schreiben und gleichzeitig den Effektivitätsmarker der entsprechenden Aufgabenanforderung in der Aufgabenstatusliste als ineffektiv festzulegen.

## Revendications

1. Procédé pour la mise à jour de paramètre dans une puce de bande de base de liaison montante côté NodeB d'un système WCDMA, **caractérisé en ce qu'**il comprend les étapes de :
un module logiciel envoyant un paramètre de mise à jour requis par la démodulation RAKE et sa demande de tâche correspondante à un module de commande principal, la demande de tâche incluant un temps effectif du paramètre de mise à jour ;
le module de commande principal donnant pour instruction à un module d'exécution de tâche au temps effectif d'utiliser le paramètre de mise à jour ; et
le module d'exécution de tâche utilisant le paramètre de mise à jour en temps réel à réception de l'instruction.

2. Procédé selon la revendication 1, **caractérisé en ce que** le paramètre requis par la démodulation RAKE est classé en plusieurs classes ; et un module logiciel envoyant un paramètre de mise à jour requis par la démodulation RAKE et sa demande de tâche correspondante au module de commande principal comprend :
le module logiciel envoyant le paramètre de mise à jour au module de commande principal ; et
le module logiciel envoyant une demande de tâche correspondant à la classe du paramètre de mise à jour au module de commande principal, la demande de tâche incluant le temps effectif du paramètre de mise à jour.

3. Procédé selon la revendication 1, **caractérisé en ce que**, après qu'un module logiciel a envoyé un paramètre de mise à jour requis par la démodulation RAKE, il comprend en outre l'étape de : le module de commande principal stockant le paramètre de mise à jour dans un nouveau stockage de paramètre correspondant ; et la demande de tâche inclut en outre le numéro de série du nouveau stockage de paramètre.

4. Procédé selon la revendication 3, **caractérisé en ce que** le module de commande principal donnant pour instruction à un module d'exécution de tâche au temps effectif d'utiliser le paramètre de mise à jour comprend :
le module de commande principal vérifiant périodiquement l'effectivité de la demande de tâche et l'état d'un canal correspondant au paramètre de mise à jour ;
le module de commande principal comparant le temps effectif de la demande de tâche avec le temps système dans la situation où la demande de tâche est effective et l'état du canal est en service ; et
si le temps effectif est égal au temps système, alors le module de commande principal envoyant l'instruction au module d'exécution de tâche, l'instruction incluant le numéro de série du nouveau stockage de paramètre.

5. Procédé selon la revendication 4, **caractérisé en ce qu'**une fois la réception de l'instruction, le module d'exécution de tâche utilisant le paramètre de mise à jour en temps réel comprend :
une fois la réception de l'instruction, le module d'exécution de tâche utilisant le paramètre de mise à jour dans le nouveau stockage de paramètre correspondant au numéro de série en temps réel.

6. Procédé selon la revendication 4, **caractérisé en ce que** le module de commande principal vérifiant périodiquement l'effectivité de la demande de tâche et l'état d'un canal correspondant au paramètre de mise à jour comprend :
le module de commande principal stockant la demande de tâche dans une mémoire vive premier entré premier sorti ;
la lecture de la demande de tâche à partir de la mémoire vive premier entré premier sorti, la vérification de l'effectivité de la demande de tâche qui est sortie en lecture, et l'écriture de la demande de tâche effective dans une liste de demande de tâche ;
l'établissement du drapeau d'effectivité de la demande de tâche à une position correspondante dans une liste d'état de tâche comme étant effectif, où la liste d'état de tâche stocke le drapeau d'effectivité de la demande de tâche et l'état de service d'un canal correspondant ; et
l'interrogation de la liste de demande de tâche et de la liste d'état de tâche dans un ordre du plus petit au plus grand ID de canal, et pour ce qui est de chaque canal, d'abord la vérification de l'état de service de canal dans la liste d'état de tâche, si l'état de service de canal est en service, alors la vérification en outre de savoir si le drapeau d'effectivité de la demande de tâche dans la liste d'état de tâche indique être effectif.

7. Procédé selon la revendication 4, **caractérisé en ce que**
avant qu'un module logiciel n'envoie un paramètre de mise à jour requis par la démodulation RAKE et une demande de tâche correspondant à celui-ci au module de commande principal, il comprend en outre l'étape de : lorsqu'il a besoin d'établir de nouveau un canal et que le canal commence à être en service, le module logiciel envoyant une demande de tâche d'établissement de canal ; et
après que le module de commande principal vérifie périodiquement l'effectivité de la demande de tâche et l'état d'un canal correspondant au paramètre de mise à jour, il comprend en outre l'étape de : le module de commande principal établissant l'état de canal correspondant au canal dans la liste d'état de tâche comme étant en service ; et écrivant l'ID de canal du canal et le numéro de série d'un nouveau stockage de paramètre dans une file d'attente de tâche et en même temps établissant le drapeau d'effectivité de la demande de tâche correspondante dans la liste d'état de tâche comme étant ineffectif.

8. Procédé selon la revendication 4, **caractérisé en ce que** le module de commande principal vérifiant périodiquement l'effectivité de la demande de tâche et l'état d'un canal correspondant au paramètre de mise à jour comprend en outre :
lors de la vérification de la demande de tâche dans la liste d'état de tâche, si l'état de canal est en service, alors le module de commande principal écrivant également l'ID de canal du canal dans la file d'attente de tâche dans la situation où la demande de tâche correspondant au canal est ineffectif.

9. Procédé selon la revendication 1, **caractérisé en ce que** la demande de tâche comprend en outre le nom de demande de tâche, le numéro de série, l'ID de canal, la zone de stockage de paramètre, et le type de demande de tâche.

10. Procédé selon l'une quelconque des revendications 1 à 8, **caractérisé en ce que** le paramètre est classé en fonction de la période de mise à jour et du type de paramètre requis par la démodulation RAKE, et le paramètre classé comprend : un paramètre de niveau de puce, un paramètre multi-trajet, un paramètre d'écart de fréquence, un paramètre de facteur d'étalement et des paramètres qui ont la même période de mise à jour et le même type que ceux des quatre classes de paramètres ci-dessus.

11. Appareil pour la mise à jour de paramètre dans une puce de bande de base de liaison montante côté NodeB d'un système WCDMA, **caractérisé en ce qu'**il comprend :
un module logiciel, adapté pour envoyer un paramètre de mise à jour requis par la démodulation RAKE et sa demande de tâche correspondante à un module de commande principal, la demande de tâche incluant le temps effectif du paramètre de mise à jour ;
le module de commande principal, adapté pour donner pour instruction à un module d'exécution de tâche au temps effectif d'utiliser le paramètre de mise à jour ; et
le module d'exécution de tâche, adapté pour utiliser le paramètre de mise à jour en temps réel une fois la réception de l'instruction.

12. Appareil selon la revendication 11, **caractérisé en ce que** le module de commande principal comprend :
un module de vérification, adapté pour vérifier périodiquement l'effectivité de la demande de tâche et l'état d'un canal correspondant au paramètre de mise à jour ;
un module de comparaison, adapté pour comparer le temps effectif de la demande de tâche avec le temps système dans la situation où la demande de tâche est effective et l'état du canal est en service ; et
un module d'envoi, adapté pour envoyer l'instruction au module d'exécution de tâche dans la situation où le résultat de comparaison du module de comparaison est que le temps effectif est égal au temps système, l'instruction incluant le numéro de série du nouveau stockage de paramètre.

13. Appareil selon la revendication 12, **caractérisé en ce que** le module d'exécution de tâche comprend :
un module de réception, adapté pour recevoir l'instruction en provenance du module de commande principal ; et
un module d'utilisation, adapté pour utiliser le paramètre de mise à jour dans le nouveau stockage de paramètre correspondant au numéro de série en temps réel une fois la réception l'instruction.

14. Appareil selon la revendication 12, **caractérisé en ce que** le module de vérification comprend :
une mémoire vive premier entré premier sorti, adaptée pour stocker la demande de tâche ;
un premier module de détection, adapté pour lire la demande de tâche à partir de la mémoire vive premier entré premier sorti, vérifier l'effectivité de la demande de tâche qui est sortie en lecture, et écrire la demande de tâche effective dans une liste de demande de tâche ; en outre adapté pour établir le drapeau d'effectivité de la demande de tâche à une position correspondante dans une liste d'état de tâche comme étant effectif, où la liste d'état de tâche stocke le drapeau d'effectivité de la demande de tâche et l'état de service d'un canal correspondant ; et
un second module de détection, adapté pour interroger la liste de demande de tâche et la liste d'état de tâche dans un ordre du plus petit au plus grand ID de canal, et pour ce qui est de chaque canal, vérifier d'abord l'état de service de canal dans la liste d'état de tâche, si l'état de service de canal est en service, alors vérifiant en outre si le drapeau d'effectivité de la demande de tâche dans la liste d'état de tâche indique être effectif.

15. Appareil selon la revendication 12, **caractérisé en ce que**
le module logiciel est en outre adapté pour envoyer une demande de tâche d'établissement de canal, lorsqu'il a besoin d'établir nouvellement un canal et que le canal commence à être en service, et avant d'envoyer un paramètre de mise à jour requis par la démodulation RAKE et une demande de tâche correspondant à celui-ci au module de commande principal ; et
le module de commande principal comprend en outre : un module d'établissement de nouveau canal adapté pour, après que le module de vérification vérifie périodiquement l'effectivité de la demande de tâche et l'état d'un canal correspondant au paramètre de mise à jour, établir l'état de canal correspondant au canal dans la liste d'état de tâche comme étant en service ; et en outre adapté pour écrire l'ID de canal du canal et le numéro de série d'un nouveau stockage de paramètre dans une file d'attente de tâche et en même temps établir le drapeau d'effectivité de la demande de tâche correspondante dans la liste d'état de tâche comme étant ineffectif.
